# EUROPÄISCHE PATENTANMELDUNG

(11) **EP 1 855 395 A1**
(43) Veröffentlichungstag der Anmeldung: **14.11.2007**
(21) Anmeldenummer: 06460011.7
(22) Anmeldetag: 08.05.2006
(51) Int. Cl.: H04B 7/26

(54) **Verfahren zur Signalübertragung in einem Funk-Kommunikationssystem**

(71) Anmelder: SIEMENS AKTIENGESELLSCHAFT, 80333 München (DE)
(72) Erfinder: Angelow, Iwajio, 43-430 Skoczow (PL); Chmiel, Mieszko, 48-340 Glucholazy (PL)

(57) **Zusammenfassung**

Die Erfindung betrifft ein Verfahren zur Signalübertragung in einem Funk-Kommunikationssystem, bei dem eine Signalübertragung auf einer Funkschnittstelle in zumindest zwei Frequenzbändern mit einer jeweils unterschiedlichen Frequenzbandbreite erfolgt, wobei den zumindest zwei Frequenzbändern ein jeweils unterschiedliches Kanalraster zugewiesen wird.

## Beschreibung

Die Erfindung betrifft ein Verfahren zur Signalübertragung in einem Funk-Kommunikationssystem sowie Komponenten eines Funk-Kommunikationssystems zum Durchführen des erfindungsgemäßen Verfahrens. Insbesondere betrifft die Erfindung eine Konfiguration der Funkschnittstelle eines Funk-Kommunikationssystems.

In Weiterentwicklungen des Funk-Kommunikations-Standards UMTS (Universal Mobile Telecommunication System) im Rahmen der 3GPP (3rd Generation Partnership Project) wird eine Unterstützung einer so genannten skalierbaren Frequenzbandbreite angestrebt. Dies bedeutet, dass Funkzellen des Systems mit Bandbreiten zwischen 1,25 MHz und 20 MHz, typischerweise in den Schritten 1,25; 2,5; 5; 10; 15 und 20 MHz, betrieben werden können, wobei zukünftig auch noch größere Bandbreiten als 20 MHz denkbar sind, um die Übertragungskapazität weiter zu steigern.

Für die Einführung einer derartigen skalierbaren Bandbreite müssen verschiedene Dinge berücksichtigt werden. Eines dieser Dinge ist dabei die Wahl der so genannten Mittenfrequenz (engl. centre frequency) für die Funkkanäle in den verschiedenen Frequenzbandbreiten, wobei ein Funkkanal mittels einer Mittenfrequenz sowie einer Bandbreite charakterisiert wird. Die Mittenfrequenz eines Funkkanals wird typischerweise auf ein so genanntes Kanalraster (engl. channel raster) abgebildet, welches die zur Verfügung stehende Frequenzbandbreite in eine Mehrzahl kleinerer Einheiten mit einheitlicher Größe unterteilt. So wird nach dem aktuellen UMTS-Standard, welcher ein Kanalraster von 200 kHz definiert, ein 5 MHz breites Frequenzband in 25 Kanäle aufgeteilt. Eine Mittenfrequenz wird innerhalb des zur Verfügung stehenden Frequenzbandes entsprechend als ein Vielfaches von 200 kHz gewählt, wobei die Wahl der Mittenfrequenz beispielsweise aufgrund von Nachbarzellinterferenz, d.h. zur Vergrößerung bzw. Verringerung des Frequenzabstands zu dem in einer Nachbarfunkzelle genutzten Frequenzbandes, getroffen wird.

Das Kanalraster von 200 kHz für den UMTS-Standard stellt einen Kompromiss dar, der einerseits eine ausreichend feine Justierung der Mittenfrequenz zur Verringerung der Nachbarzellinterferenz bzw. dem so genannten ACPR (Adjacent Channel Power Ratio) gewährt, andererseits kompatibel mit dem Mobilfunkstandard GSM (Global System for Mobile Communication) ist, welcher ebenfalls Mittenfrequenzen als ein Vielfaches von 200 kHz vorschreibt, wobei die Kanalbandbreite nach dem GSM-Standard selbst 200 kHz beträgt.

Für die Weiterentwicklung des UMTS-Standards wird weiterhin eine Bahdbreiteneffizienz von 90% angestrebt, d.h. 10% der zur Verfügung stehenden Bandbreite ist als Schutzabstand (engl. guard band) zwischen zwei benachbarten Frequenzbändern vorzusehen. Dies entspräche bei einer Bandbreite von 1,25 MHz einem Schutzabstand von 125 kHz, bei einer Bandbreite von 20 MHz jedoch bereits einem Schutzabstand von 2 MHz. Würde nun entsprechend dem aktuellen UMTS-Standard ein Kanalraster mit 200 kHz definiert, so ergäbe dies im Falle der Bandbreite 1,25 MHz einen Mindestschutzabstand von ebenfalls 200 kHz und somit einer ineffizienteren Nutzung des zur Verfügung stehenden Frequenzbandes. Andererseits würde ein Kanalraster von 200 kHz für eine Bandbreite von 20 MHz eine zu feine Granularität für die Einstellung der Mittenfrequenz bedeuten. Für große Bandbreiten hat das Kanalraster inbesondere Auswirkungen auf die Zugriffszeiten, d.h. Abstimmen des Frequenzsynthesizers, Empfangen von Signalen auf der Frequenz etc. Wird eine mittlere Zugriffszeit eines Teilnehmerendgerätes mit 500 ms je Frequenzkanal angenommen, so kann es einige Sekunden bis Minuten dauern, bis das Teilnehmerendgerät bei einem Erstzugriff auf das Frequenzband auf die gewünschte Mittenfrequenz abgestimmt ist.

Aufgabe der Erfindung ist es daher, ein Verfahren sowie Komponenten eines Funk-Kommunikationssystems anzugeben, die eine flexible und effiziente Nutzung eines unterschiedliche Frequenzbandbreiten unterstützenden Funk-Kommunikationssystems ermöglichen, anzugeben. Diese Aufgabe wird durch die Merkmale der unabhängigen Patentansprüche gelöst. Vorteilhafte Weiterbildungen der Erfindung sind abhängigen Patentansprüchen entnehmbar.

Erfindungsgemäß sind in einem Funk-Kommunikationssystem zumindest zwei Frequenzbänder mit einer jeweils unterschiedlichen Frequenzbandbreite vorgesehen, wobei ein jeweils unterschiedliches Kanalraster definiert wird. Nach der Erfindung wird vorteilhaft nicht ein einziges Kanalraster für jede Frequenzbandbreite gewählt, sondern vielmehr das Kanalraster an die Anforderungen der jeweiligen Frequenzbandbreite individuell angepasst.

Nach einer ersten Ausgestaltung der Erfindung wird das Kanalraster abhängig von der Frequenzbandbreite und der Bandbreiteneffizienz gewählt. Dabei werden für größere Frequenzbandbreiten Kanalraster mit größeren Abständen der Mittenfrequenzen gewählt.

Bei einer Frequenzbandbreite von beispielsweise 1,25 MHz und einer Bandbreiteneffizienz von 90% würde ein Schutzabstand von 62,5 kHz am oberen und unteren Ende des Frequenzbandes des Funkkanals vorgesehen, d.h. gesamt 125 kHz entsprechend 10%. Um diesen Wert möglichst nahe zu kommen, würde ein Kanalraster von beispielsweise 50 kHz gewählt werden. Entsprechend würde den einleitend genannten Frequenzbandbreiten folgende Kanalraster zugewiesen werden. Für eine Frequenzkanalbreite von 2,5 MHz würde ein Kanalraster von 100 kHZ, für 5 MHz ein Kanalraster von 200 kHz, für 10 MHz ein Kanalraster von 400 kHz, für 15 MHz ein Kanalraster von 600 kHz und für 20 MHz ein Kanalraster von 800 kHz zugewiesen. Insbesondere wird durch die größeren Kanalraster bei größeren Frequenzkanalbreiten die benötigte Zeit für einen Erstzugriff eines Teilnehmerendgerätes aufgrund der begrenzten Zahl möglicher Mittenfrequenzen vorteilhaft reduziert.

Nach einer weiteren Ausgestaltung der Erfindung wird einer Mehrzahl von Frequenzbandbreiten ein einheitliches Kanalraster zugeordnet, währenddessen weiteren Frequenzbandbreiten ein jeweils individuelles Kanalraster zugewiesen wird.

Insbesondere wird nach einer Weiterbildung dieser Ausgestaltung Frequenzbandbreiten mit einem vergleichsweise breiten Frequenzband ein einheitliches Kanalraster zugeordnet. Auf die einleitend genannten Frequenzkanalbreiten für die Weiterentwicklung des UMTS-Standards abgebildet würde dies beispielsweise zu folgenden Zuweisungen. Für eine Frequenzkanalbreite von 1,25 MHz würde beispielsweise ein Kanalraster von 50 kHz und für 2,5 MHz ein Kanalraster von 100 kHz, für die Frequenzkanalbreiten 5, 10, 15 und 20 MHz jedoch ein Kanalraster von jeweils 200 kHz zugewiesen werden. Nach

Gemäß einer hierzu alternativen Weiterbildung wird Frequenzbandbreiten mit einem vergleichsweise schmalen Frequenband ein einheitliches Kanalraster zugewiesen. Für Frequenkanalbreiten 1,25, 2,5 und 5 MHz würde beispielsweise ein Kanalraster von 50 kHz zugewiesen werden, währenddessen für 10 MHz ein Kanalraster von 200 kHz, für 15 MHz ein Kanalraster von 300 kHz und für 20 MHz ein Kanalraster von 400 kHz zugewiesen wird.

Einer weiteren Ausgestaltung zufolge werden jeweils mehrere Frequenzbandbreiten zu einer Gruppe zusammengefasst und jeweiliges ein Kanalraster gruppenindividuell zugewiesen. So würde den Frequenzkanalbreiten 1,25 und 2,5 MHz beispielsweise ein Kanalraster von 50 kHz, den Frequenzkanalbreiten 5 und 10 MHz ein Kanalraster von 200 kHz, un den Frequenzkanalbreiten 15 und 20 MHz ein Kanalraster von 400 kHz zugewiesen werden.

Nach einer weiteren Ausgestaltung der Erfindung wird ein kleinstes Kanalraster definiert, welches jeweils mit einem Faktor multipliziert den jeweiligen Frequenzkanalbreiten zugewiesen wird. Dies kann entsprechend nach folgender Formel erfolgen: x * n, wobei x in kHz dem kleinsten Kanalraster entspricht. Mit beispielsweise n = {1, 2, 4, 8, 12, 16} ergibt sich folglich für die Frequenzkanalbreite 1,25 MHz ein Kanalraster von 50 kHz, für 2,5 MHz ein Kanalraster von 100 kHz, für 5 MHz ein Kanalraster von 200 kHz, für 10 MHz ein Kanalraster von 400 kHz, für 15 MHz ein Kanalraster von 600 kHz und für 20 MHz ein Kanalraster von 800 kHz. Vorteilhaft kann mittels einer derartigen Formelangabe dies in einfacher weise in einem Teilnehmerendgerät gespeichert werden und ist durch simple Ergänzung des Faktors n auch auf größere Frequenzbandbreiten erweiterbar. Andernfalls ist auch eine Speicherung der jeweilige Werte für das Kanalraster in einer Tabelle in dem Teilnehmerendgerät speicherbar.

Gemäß einer weiteren Ausgestaltung der Erfindung kann auch vorgesehen werden, dass bei vergleichsweise kleinen Frequenzkanalbreiten keinerlei Kanalraster vorgesehen wird, sondern dies vielmehr den vergleichsweise großen Frequenzkanalbreiten vorbehalten bleibt.

Obwohl die Erfindung lediglich mit Bezug auf den UMTS-Standard bzw. dessen Weiterentwicklungen beschrieben wurde, ist ein Einsatz des erfindungsgemäßen Prinzips auch in anderen bekannten Standards sowie proprietären Systemen mit skalierbaren Bandbreiten dankbar.

## Patentansprüche

1. Verfahren zur Signalübertragung in einem Funk-Kommunikationssystem, bei dem eine Signalübertragung auf einer Funkschnittstelle in zumindest zwei Frequenzbändern mit einer jeweils unterschiedlichen Frequenzbandbreite erfolgt, wobei den zumindest zwei Frequenzbändern ein jeweils unterschiedliches Kanalraster zugewiesen wird.

2. Verfahren nach Anspruch 1, wobei
das Kanalraster einer Definition von Mittenfrequenzen dient.

3. Teilnehmerendgerät eines Funk-Kommunikationssystems, mit Mitteln zum Senden und Empfangen von Signalen auf einer Funkschnittstelle in zumindest zwei Frequenzbändern mit einer jeweils unterschiedlichen Frequenzbandbreite, wobei die zumindest zwei Frequenzbänder ein jeweils unterschiedliches Kanalraster aufweisen.

4. Basisstation eines Funk-Kommunikationssystems, mit Mitteln zum Senden und Empfangen von Signalen auf einer Funkschnittstelle in zumindest zwei Frequenzbändern mit einer jeweils unterschiedlichen Frequenzbandbreite, wobei die zumindest zwei Frequenzbänder ein jeweils unterschiedliches Kanalraster aufweisen.

5. Funk-Kommunikationssystem, aufweisend zumindest ein Teilnehmerendgerät und zumindest eine Basisstation nach den Ansprüchen 3 und 4.

6. Funk-Kommunikationssystem, aufweisend eine Funkschnittstelle mit zumindest zwei Frequenzbändern mit einer jeweils unterschiedlichen Frequenzbandbreite, wobei den zumindest zwei Frequenzbändern ein jeweils unterschiedliches Kanalraster zugewiesen ist.
